# EUROPÄISCHE PATENTSCHRIFT

(11) **EP 3 085 553 B1**
(45) Veröffentlichungstag und Bekanntmachung des Hinweises auf die Patenterteilung: **25.12.2019**
(21) Anmeldenummer: 16151278.5
(22) Anmeldetag: 14.01.2016
(51) Int. Cl.: B29D 30/72, B60C 19/08, B29C 48/07, B29C 48/155, B29C 48/16, B29L 30/00

(54) **VERFAHREN ZUR HERSTELLUNG VON ELEKTRISCH LEITFÄHIGEN PASSAGEN IN EINER SEITENWAND EINES FAHRZEUGLUFTREIFENS UND DAMIT HERGESTELLTER FAHRZEUGLUFTREIFEN**
METHOD FOR THE PREPARATION OF ELECTRICALLY CONDUCTIVE PASSAGES IN A SIDE WALL OF A PNEUMATIC TYRE FOR A VEHICLE AND PNEUMATIC TYRE OBTAINED THEREBY
PROCEDE DE FABRICATION DE PASSAGES ELECTROCONDUCTEURS DANS UNE PAROI LATERALE D'UN PNEUMATIQUE DE VEHICULE ET PNEU AINSI OBTENU

(30) Priorität: 21.04.2015 DE 102015207221
(43) Veröffentlichungstag der Anmeldung: 26.10.2016
(73) Patentinhaber: Continental Reifen Deutschland GmbH, 30165 Hannover (DE)
(72) Erfinder: Holodenko, Mihail, 30175 Hannover (DE); Disselhoff, Stephan, 29336 Nienhagen (DE)
(74) Vertreter: Finger, Karsten

(56) Entgegenhaltungen:
- EP-A2- 0 340 147
- DE-A1-102006 029 046
- DE-A1-102010 037 004
- DE-A1-102011 000 361
- DE-U1- 29 612 955
- US-A- 4 106 965
- US-B1- 6 834 693

## Beschreibung

Die Erfindung betrifft ein Verfahren zur Herstellung von elektrisch leitfähigen Passagen in einer Seitenwand eines Fahrzeugluftreifens, wobei die elektrisch leitfähigen Passagen zwischen einem elektrisch leitfähigen Laufstreifenteil, welcher in elektrisch leitfähiger Verbindung mit der Laufstreifenaußenfläche steht, und dem mit einer Felge in Kontakt kommenden elektrisch leitfähigen Hornprofil verlaufen, wobei die Seitenwand aus einer extrudierten Materialbahn aus einer elektrisch nicht leitfähigen Kautschukmischung hergestellt wird.

Es ist bekannt und üblich, dass der Einsatz von mit Silica (Kieselsäure) gefüllten Kautschukmischungen gegenüber ausschließlich mit Ruß gefüllten Kautschukmischungen zur Fertigung von Laufstreifen und Seitenwänden von Fahrzeugluftreifen zur Reduktion des Rollwiderstandes eines Fahrzeugluftreifens beiträgt. Silica enthaltende Kautschukmischungen weisen im Vergleich zu ausschließlich mit Ruß gefüllten Kautschukmischungen eine deutlich geringere elektrische Leitfähigkeit auf, sodass Maßnahmen zur Ableitung der beim Fahren auftretenden elektrostatischen Aufladungen getroffen werden müssen.

Hierzu ist es beispielsweise üblich, den Laufstreifen mit einem sogenannten Carbon Center Beam, welcher ein im Laufstreifen eingebauter und über den Umfang des Reifens verlaufender elektrisch leitfähiger Gummistreifen ist, zu versehen, welcher beispielsweise mit einer elektrisch leitfähigen Laufstreifenbase in Kontakt steht. Es ist ferner bekannt, in den Reifenseitenwänden elektrisch leitfähige Passagen zwischen der Reifenfelge und dem Laufstreifen vorzusehen. Verfahren zur Fertigung von Reifen mit leitfähigen Passagen sind beispielsweise aus der DE 10 2008 036 451 B4 und der DE 10 2008 058 881 A1 bekannt.

Bei dem aus der DE 10 2008 036 451 B4 bekannten Verfahren wird ein elektrisch leitfähiges Gummimaterial im Schulterbereich des Reifens aufgebracht, sodass dieses abwechselnd eine erste Stelle, die zur Lauffläche des Schulterbereiches hin freiliegt, und eine zweite Stelle, die mit einer Felge oder einem leitfähigen Gummimaterial in Kontakt tritt, berührt. Bei dem aus der DE 10 2010 037 004 A1 bekannten Fahrzeugluftreifen bestehen die Seitenwände und/oder die Gummierung der Karkasseinlage aus einem elektrisch nicht leitfähigen Gummimaterial. Zwischen der Felge und zumindest einem elektrisch leitfähigen Bauteil wird eine elektrisch leitfähige Passage von einem Faden, einem Strang oder einem bandartigen Element gebildet. Ferner ist aus der US 6 834 693 B1 ein Verfahren zur Herstellung von elektrisch leitfähigen Passagen in einem Laufstreifen bekannt. Der Laufstreifen ist in radialer Richtung aus zwei elektrisch nicht leitfähigen Schichten aufgebaut, wobei in jeder Schicht ein elektrisch leitfähiger Gummistreifen verläuft. Der in der radial inneren Schicht befindliche Gummistreifen verläuft in Draufsicht und in Umfangsrichtung wellenförmig. Zum Einbringen des Gummistreifens wird zunächst die radial innere, extrudierte Schicht auf eine Rolle aufgelegt. Anschließend wird ein elektrisch leitfähiger Mischungsstreifen mittels eines bewegten Mikro-Extruders eingebracht, welcher mit einer Schneide einen wellenförmig verlaufenden Schlitz in der Schicht erzeugt, in welchen das elektrisch leitfähige Material eingebracht wird.

Der Erfindung liegt daher die Aufgabe zugrunde, ein Verfahren der eingangs genannten Art zur Verfügung zu stellen, welches es gestattet, auf einfache und in den üblichen Ablauf der Herstellung der Seitenwand-Materialbahnen einbindbare Weise elektrisch leitfähige Passagen herzustellen.

Die gestellte Aufgabe wird erfindungsgemäß dadurch gelöst, dass die Materialbahn nach ihrer Extrusion auf einer Transporteinrichtung mit ihrer die Innenseite der Seitenwand bildenden Seite als Oberseite abtransportiert wird,
aus einer elektrisch leitfähigen Kautschukmischung eine Schnur oder ein Streifen extrudiert wird, welche bzw. welcher während des Transportes der extrudierten Materialbahn auf die Oberseite der Materialbahn derart in Wellenform aufgebracht wird, dass im fertigen Reifen die von der Schnur bzw. dem Streifen auf der Innenseite der Seitenwand gebildeten elektrisch leitfähigen Passagen jeweils in den Bereichen der maximalen Auslenkung der Wellenform abwechselnd mit dem elektrisch leitfähigen Laufstreifenteil und dem Hornprofil in Kontakt sind.

Das erfindungsgemäße Verfahren gestattet es, mit geringem Investitionsaufwand und auf simple Weise die Materialbahnen von Seitenwänden mit einer elektrisch leitfähigen Schnur oder einem elektrisch leitfähigen Streifen zu versehen, die bzw. der infolge seiner Wellenform auf der Materialbahn im fertigen Reifen die erforderlichen elektrisch leitfähigen Verbindungen bildet. Das Verfahren lässt sich auf einfache Weise in den bestehenden Fertigungsprozess von Seitenwand-Materialbahnen einbinden.

Bei einer bevorzugten Ausführungsvariante der Erfindung wird die Schnur beziehungsweise der Streifen unmittelbar nach ihrer beziehungsweise seiner Extrusion durch Auslenken des Extruders quer zur Transportrichtung der Materialbahn auf die Materialbahn aufgebracht. Bei einer weiteren, vorteilhaften Ausführungsform der Erfindung ist eine Auslenkeinrichtung vorgesehen, mittels welcher die Schnur beziehungsweise der Streifen parallel zur Materialbahn und quer zur Transportrichtung ausgelenkt wird. Bei beiden Ausführungsvarianten ist der erforderliche maschinelle Aufwand gering.

Bei einer weiteren bevorzugten Ausführungsform der Erfindung wird die ausgelenkte Schnur beziehungsweise der ausgelenkte Streifen auf eine rotierende Walze aufgebracht und von dieser auf die Oberseite der Materialbahn abgerollt beziehungsweise aufgebracht und angedrückt. Diese Walze stellt daher eine haftende Verbindung zwischen der Schnur beziehungsweise dem Streifen und der Materialbahn her.

Zur Erstellung verlässlich leitfähiger Passagen in der Seitenwand ist es ausreichend, wenn der Streifen beziehungsweise die Schnur relativ dünn ausgeführt ist. So wird beispielsweise der Streifen mit einer Dicke von 0,5 mm bis 1,0 mm und mit einer Breite von 2,0 mm bis 4,0 mm extrudiert. Zusätzlich kann vorgesehen sein, den extrudierten Streifen in einem Zweiwalzenkalander auf eine konstant geringe Dicke von etwa 0,5 mm bis 0,6 mm zu kalibrieren. Wird eine Kautschukmischungsschnur verwendet so wird diese vorzugsweise mit einem Durchmesser von 1,0 mm bis 3,0 mm, insbesondere von 1,5 mm bis 2,5 mm, extrudiert.

Die Erfindung betrifft ferner einen Fahrzeugluftreifen, insbesondere einen Nutzfahrzeugreifen, welcher gemäß dem erfindungsgemäßen Verfahren hergestellt ist und in mindestens einer seiner Seitenwände entsprechende elektrisch leitfähige Passagen aufweist.

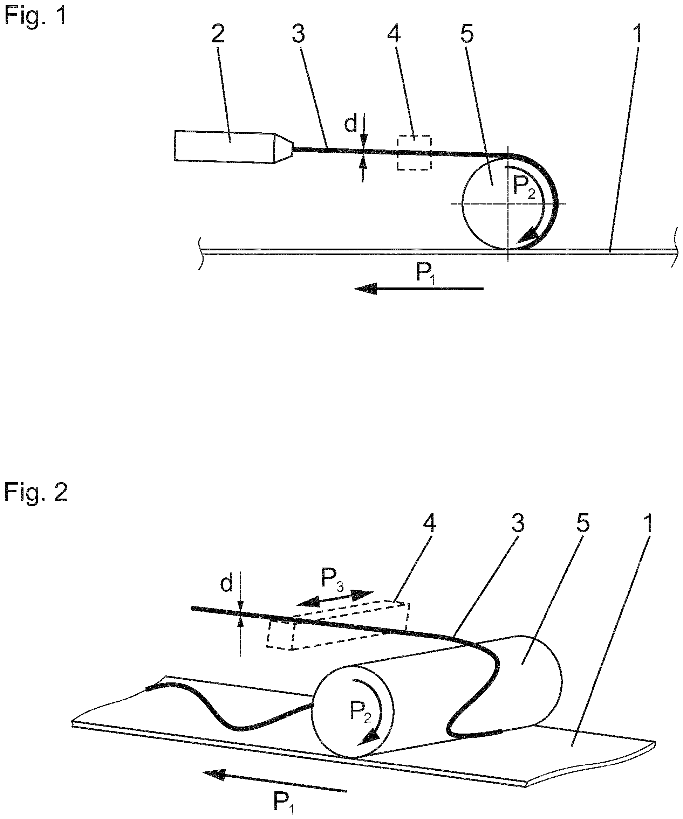

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 und Fig. 2 je eine schematische Ansicht von Bauteilen, die am Ablauf des erfindungsgemäßen Verfahrens beteiligt sind.

Das erfindungsgemäße Verfahren befasst sich mit der Herstellung elektrisch leitfähiger Passagen in Seitenwandbereichen von Fahrzeugluftreifen, insbesondere von Nutzfahrzeugreifen, wobei diese Fahrzeugluftreifen elektrisch nicht leitfähige, als Füllstoff Silica (Kieselsäure) enthaltende Seitenwände und einen Unterbau aufweisen, insbesondere eine Gummierung der Gürtellagen, der ebenfalls elektrisch nicht leitfähig ist. Die Passagen verlaufen zwischen einem Laufstreifenteil, welcher in elektrisch leitfähiger Verbindung mit der Laufstreifenaußenfläche steht und den mit der Felge in Kontakt kommenden elektrisch leitfähigen Hornprofilen. Der elektrisch leitfähige Laufstreifenteil kommt beim Fahren entweder unmittelbar mit dem Untergrund in Kontakt oder ist insbesondere in an sich bekannter Weise mit zumindest einem zur Laufstreifenoberfläche verlaufenden leitfähigen Gummistreifen, einem Carbon Center Beam, versehen. Dabei wird im Rahmen der gegenständlichen Erfindung unter einem elektrisch nicht leitfähigen Gummimaterial ein solches verstanden, welches einen elektrischen Widerstand > 10⁸ Ohm aufweist.

Fig. 1 zeigt einen Abschnitt einer Materialbahn 1 für eine Seitenwand, welche in an sich bekannter Weise durch Extrusion einer entsprechenden Kautschukmischung hergestellt und unmittelbar nach der Extrusion auf einer nicht gezeigten Transporteinrichtung abtransportiert wird, wobei die Transportrichtung durch den Pfeil P₁ gekennzeichnet ist.

Mittels eines in Fig. 1 angedeuteten Extruders 2 wird aus einer elektrisch leitfähigen Kautschukmischung eine Rundschnur 3 mit einem Durchmesser d von 1,0 mm bis 3,0 mm, insbesondere von 1,5 mm bis 2, 5 mm, extrudiert. Die Rundschnur 3 passiert eine Auslenkeinrichtung 4 und wird von dieser auf die Oberfläche einer Walze 5 gelegt, welche auf der Materialbahn 1, quer zur Längserstreckung derselben, aufliegt und auf nicht gezeigte Weise in Richtung des Pfeiles P₂ in Drehbewegung versetzt wird.

Wie in Fig. 2 durch den Doppelpfeil P₃ angedeutet ist, wird die Auslenkeinrichtung 4 parallel zur Materialbahn 1 und quer zur Transportrichtung P₁ ausgelenkt und derart in eine oszillierende Bewegung in Richtung des Doppelpfeiles P₃ versetzt, sodass die Rundschnur 3 zunächst wellenförmig auf die Walze 5 und von dieser wellenförmig auf die obere Seite der Materialbahn 1 aufgebracht wird, wobei diese Seite der Materialbahn 1 beim Reifenaufbau die Innenseite der Seitenwand bildet. Mittels der Walze 5 wird die Rundschnur 3 an die Materialbahn 1 angedrückt, wodurch die Rundschnur 3 an der Materialbahn 1 haftet. Die Transportgeschwindigkeit der Materialbahn 1 und die Rotationsgeschwindigkeit der Walze 5 sind aufeinander entsprechend abgestimmt. Die Materialbahn 1 wird mit der an ihr anhaftenden Rundschnur 3 bis zu ihrer Verwendung beim Reifenaufbau in einer Kassette aufgewickelt.

Bei einer alternativen Ausführungsform der Erfindung wird anstelle einer Rundschnur 3 ein mittels eines Rollerhead-Extruders aus einer elektrisch leitfähigen Kautschukmischung gefertigter Streifen mit einer Dicke von 0,5 mm bis 1,0 mm und mit einer Breite von 2,0 mm bis 4,0 mm verwendet. Der extrudierte Streifen kann vor der Auslenkeinrichtung 4 in einem insbesondere an sich bekannten und klein dimensionierten Zweiwalzenkalender auf eine Dicke von 0,5 mm bis 0,6 mm kalibriert werden. Der Streifen wird anschließend über die Auslenkeinrichtung 4 unmittelbar auf die Materialbahn 1 aufgebracht und gegebenenfalls mit einer separaten Walze angedrückt.

Bei weiteren, nicht gezeigten Ausführungsformen des erfindungsgemäßen Verfahrens kann der Extruder 2 bzw. der Rollerhead-Extruder selbst parallel zur Materialbahn 1 und quer zur Transportrichtung P₁ ausgelenkt werden, sodass keine separate Auslenkeinrichtung 4 erforderlich ist.

Bei sämtlichen Ausführungsformen kann das Verfahren mittels zumindest einer CCD-Kamera überwacht werden, um einen automatischen Ablauf des Verfahrens über eine vorgesehene elektronische Regelung und Steuerung sicherzustellen.

### Bezugsziffernliste

- 1: Materialbahn
- 2: Extruder
- 3: Rundschnur
- 4: Auslenkeinrichtung
- 5: Walze
- d: Durchmesser

## Patentansprüche

1. Verfahren zur Herstellung von elektrisch leitfähigen Passagen in einer Seitenwand eines Fahrzeugluftreifens, wobei die elektrisch leitfähigen Passagen zwischen einem elektrisch leitfähigen Laufstreifenteil, welcher in elektrisch leitfähiger Verbindung mit der Laufstreifenaußenfläche steht, und dem mit einer Felge in Kontakt kommenden elektrisch leitfähigen Hornprofil verlaufen, wobei die Seitenwand aus einer extrudierten Materialbahn (1) aus einer elektrisch nicht leitfähigen Kautschukmischung hergestellt wird,
**dadurch gekennzeichnet,**
**dass** die Materialbahn (1) nach ihrer Extrusion auf einer Transporteinrichtung mit ihrer die Innenseite der Seitenwand bildenden Seite als Oberseite abtransportiert wird,
aus einer elektrisch leitfähigen Kautschukmischung eine Schnur (3) oder ein Streifen extrudiert wird, welche bzw. welcher während des Transportes der extrudierten Materialbahn (1) auf die Oberseite der Materialbahn (1) derart in Wellenform aufgebracht wird, dass im fertigen Reifen die von der Schnur (3) bzw. dem Streifen auf der Innenseite der Seitenwand gebildeten elektrisch leitfähigen Passagen jeweils in den Bereichen der maximalen Auslenkung der Wellenform abwechselnd mit dem elektrisch leitfähigen Laufstreifenteil und dem Hornprofil in Kontakt sind.

2. Verfahren nach Anspruch 1, **dadurch gekennzeichnet, dass** die Schnur (3) bzw. der Streifen unmittelbar nach ihrer bzw. seiner Extrusion durch Auslenken des Extruders (2) quer zur Transportrichtung (P₁) der Materialbahn (1) auf die Materialbahn (1) aufgebracht wird.

3. Verfahren nach einem der Anspruch 1, **dadurch gekennzeichnet, dass** die Schnur (3) bzw. der Streifen mittels einer Auslenkeinrichtung (4) parallel zur Materialbahn (1) und quer zur Transportrichtung (P₁) ausgelenkt wird.

4. Verfahren nach einem der Ansprüche 1 bis 3, **dadurch gekennzeichnet, dass** die ausgelenkte Schnur (3) bzw. der ausgelenkte Streifen auf eine rotierende Walze (5) positioniert wird, von welcher die Schnur (3) bzw. der Streifen auf die Materialbahn (1) aufgebracht und angedrückt wird.

5. Verfahren nach einem der Ansprüche 1 bis 4, **dadurch gekennzeichnet, dass** der Streifen in einer Dicke von 0,5 mm bis 1,0 mm und einer Breite von 2,0 mm bis 4,0 mm extrudiert wird.

6. Verfahren nach Anspruch 5, **dadurch gekennzeichnet, dass** der extrudierte Streifen in einem Zweiwalzenkalander auf eine Dicke von 0,5 mm bis 0,6 mm kalibriert wird.

7. Verfahren nach einem der Ansprüche 1 bis 6, **dadurch gekennzeichnet, dass** die Schnur (3) mit einem Durchmesser (d₁) von 1,0 mm bis 3,0 mm, insbesondere von 1,5 mm bis 2,5 mm, extrudiert wird.

8. Fahrzeugluftreifen, insbesondere Nutzfahrzeugreifen, welcher gemäß dem Verfahren nach einem der Ansprüche 1 bis 7 hergestellt ist.

## Claims

1. Method for producing electrically conductive passages in a sidewall of a pneumatic vehicle tyre, the electrically conductive passages extending between an electrically conductive tread part, which is in electrically conductive connection with the outer tread surface, and the electrically conductive flange profile that comes into contact with a wheel rim, the sidewall being produced from an extruded sheet of material (1) comprising an electrically nonconductive rubber compound,
**characterized**
**in that**, after its extrusion, the sheet of material (1) is transported away on a transporting device, with its side that forms the inner side of the sidewall as the upper side,
a strand (3) or a strip is extruded from an electrically conductive rubber compound and, during the transport of the extruded sheet of material (1), is applied to the upper side of the sheet of material (1) in a wave form in such a way that, in the finished tyre, the electrically conductive passages formed on the inner side of the sidewall by the strand (3) or the strip are in contact alternately with the electrically conductive tread part and the flange profile in the regions of the maximum deflection of the wave form, respectively.

2. Method according to Claim 1, **characterized in that**, immediately after its extrusion, the strand (3) or the strip is applied to the sheet of material (1) by deflecting the extruder (2) transversely in relation to the transporting direction (P₁) of the sheet of material (1).

3. Method according to Claim 1, **characterized in that** the strand (3) or the strip is deflected by means of a deflecting device (4) parallel to the sheet of material (1) and transversely to the transporting direction (P₁).

4. Method according to one of Claims 1 to 3, **characterized in that** the deflected strand (3) or the deflected strip is positioned on a rotating roll (5), from which the strand (3) or the strip is applied and pressed onto the sheet of material (1).

5. Method according to one of Claims 1 to 4, **characterized in that** the strip is extruded in a thickness of 0.5 mm to 1.0 mm and a width of 2.0 mm to 4.0 mm.

6. Method according to Claim 5, **characterized in that** the extruded strip is calibrated in a two-roll calender to a thickness of 0.5 mm to 0.6 mm.

7. Method according to one of Claims 1 to 6, **characterized in that** the strand (3) is extruded with a diameter (d₁) of 1.0 mm to 3.0 mm, in particular of 1.5 mm to 2.5 mm.

8. Pneumatic vehicle tyre, in particular commercial vehicle tyre, which is produced by the method according to one of Claims 1 to 7.

## Revendications

1. Procédé de fabrication de passages électriquement conducteurs dans une paroi latérale d'un pneumatique de véhicule automobile, dans lequel les passages électriquement conducteurs s'étendent entre une partie formant bande de roulement électriquement conductrice qui est en liaison électriquement conductrice avec la surface extérieure de la bande de roulement et la sculpture de rebord électriquement conductrice qui vient en contact avec une jante, dans lequel la paroi latérale est constituée d'une bande de matériau extrudé (1) fabriquée à partir d'un mélange de caoutchouc électriquement non conducteur,
**caractérisé en ce que** la bande de matériau (1), après son extrusion, est transportée sur un dispositif de transport, avec sa face formant la face intérieure de la paroi latérale constituant la face supérieure,
**en ce qu'**une corde (3) ou une bande est extrudée à partir d'un mélange de caoutchouc électriquement conducteur, laquelle corde ou bande, pendant le transport de la bande de matériau extrudée (1), est appliquée sous une forme ondulée sur la face supérieure de la bande de matériau (1) de telle sorte que, dans le pneumatique fini, les passages électriquement conducteurs formés par la corde (3) ou la bande sur la face intérieure de la paroi latérale soient chacun alternativement en contact avec la partie formant bande de roulement électriquement conductrice et la sculpture de rebord dans la zone de déviation maximale de la forme ondulée.

2. Procédé selon la revendication 1, **caractérisé en ce que** la corde (3) ou la bande est appliquée sur la bande de matériau (1) immédiatement après son extrusion en déviant l'extrudeuse (2) transversalement à la direction de transport (P₁) de la bande de matériau (1).

3. Procédé selon la revendication 1, **caractérisé en ce que** la corde (3) ou la bande est déviée au moyen d'un dispositif de déviation (4) parallèlement à la bande de matériau (1) et transversalement à la direction de transport (P₁).

4. Procédé selon l'une des revendications 1 à 3, **caractérisé en ce que** la corde (3) déviée ou la bande déviée est positionnée sur un cylindre rotatif (5), à partir duquel la corde (3) ou la bande est appliquée et pressée sur la bande de matériau (1).

5. Procédé selon l'une des revendications 1 à 4, **caractérisé en ce que** la bande est extrudée à une épaisseur de 0,5 mm à 1,0 mm et une largeur de 2,0 mm à 4,0 mm.

6. Procédé selon la revendication 5, **caractérisé en ce que** la bande extrudée est calibrée dans une calandre à deux cylindres à une épaisseur de 0,5 mm à 0,6 mm.

7. Procédé selon les revendications 1 à 6, **caractérisé en ce que** la corde (3) est extrudée à un diamètre (d₁) de 1,0 mm à 3,0 mm, en particulier de 1,5 mm à 2,5 mm.

8. Pneumatique de véhicule, en particulier pneumatique de véhicule utilitaire, qui est fabriqué conformément au procédé selon l'une des revendications 1 à 7.
